# EUROPÄISCHE PATENTSCHRIFT

(11) **EP 2 694 264 B1**
(45) Veröffentlichungstag und Bekanntmachung des Hinweises auf die Patenterteilung: **19.08.2015**
(21) Anmeldenummer: 12702787.8
(22) Anmeldetag: 27.01.2012
(51) Int. Cl.: B29B 11/16, B29C 70/54, B29C 70/38, B29C 70/56, B29C 70/20

(54) **VORRICHTUNG UND VERFAHREN ZUR HERSTELLUNG VON FASERVORFORMLINGEN, DIE INSBESONDERE EINE VORSTUFE BEI DER HERSTELLUNG VON FASERVERSTÄRKTEN KUNSTSTOFF-BAUTEILEN DARSTELLEN**
DEVICE AND METHOD FOR PRODUCING FIBER PREFORMS, WHICH ARE A PRECURSOR IN THE PRODUCTION OF FIBER-REINFORCED PLASTIC COMPONENTS IN PARTICULAR
DISPOSITIF ET PROCÉDÉ DE FABRICATION DE PRÉFORMES À FIBRES CONSTITUANT NOTAMMENT UNE PHASE PRÉALABLE DANS LA FABRICATION DE COMPOSANTS PLASTIQUES RENFORCÉS PAR FIBRES

(30) Priorität: 08.04.2011 DE 102011007021
(43) Veröffentlichungstag der Anmeldung: 12.02.2014
(73) Patentinhaber: Voith Patent GmbH, 89522 Heidenheim (DE)
(72) Erfinder: GÖTTINGER, Marco, 81543 München (DE); KAISER, Michael, 81547 München (DE)
(86) Internationale Anmeldenummer: PCT/EP2012/051290
(87) Internationale Veröffentlichungsnummer: WO 2012/136392

(56) Entgegenhaltungen:
- DE-A1- 19 922 799
- US-A1- 2011 000 608

## Beschreibung

Die Erfindung betrifft eine Vorrichtung zur Herstellung von Faservorformlingen, die insbesondere eine Vorstufe bei der Herstellung von faserverstärkten Kunststoff-Bauteilen darstellen, wobei die Vorrichtung mehrere Abwickelstationen für die Bereitstellung mehrerer Garne oder Rovings, mehrere Greifer, die jeweils einzelne oder mehrere Garne oder Rovings an ihrem Anfang greifen können, und wenigstens ein erstes Formwerkzeug aufweist, wobei jeder Greifer auf einem Pfad zwischen einer Maximalposition und einer Abholposition hin und her bewegbar ist, und wobei die Abholposition an einer Garnübergabestelle vorgesehen ist und näher an der Abwickelstation ist als die Maximalposition.

Weiterhin betrifft die Erfindung ein Verfahren, unter Verwendung der Vorrichtung, zur Herstellung von Faservorformlingen, die beispielsweise eine Vorstufe bei der Herstellung von faserverstärkten Kunststoff-Bauteilen darstellen, welches folgende Verfahrensschritte nacheinander aufweist:
- Spannen von Garnen oder Rovings für eine erste Lage mithilfe mehrerer Greifer
- Drapieren der ersten Lage über ein erstes Formwerkzeug
- Abtrennen der Garne oder Rovings der ersten Lage
- Spannen von Garnen oder Rovings für eine zweite Lage mithilfe mehrerer Greifer
- Drapieren einer weiteren Lage über das erste Formwerkzeug
- Abtrennen der Garne oder Rovings der zweiten Lage.

Faserverstärkter Kunststoff besteht aus Matrixmaterial, das u.a. die Steifigkeit ergibt und aus Fasern, die in das Matrixmaterial eingebettet sind und die u.a. die Zugfestigkeit liefern. Faserverstärkter Kunststoff wird besonders für hochbelastetete Bauteile verwendet, die trotzdem noch möglichst leicht sein sollen. Da die Fasern in Querrichtung keine Festigkeit vermitteln, müssen die Fasern so ausgerichtet sein, dass ihre Längsrichtung mit der jeweiligen Belastungsrichtung möglichst gut übereinstimmt. Um das zu erreichen, müssen die Fasern oft in verschiedene Richtungen gelegt werden. Je besser und genauer die Faserlage an die Belastung angepasst ist, umso besser wird das Bauteil sein. Für Bauteile aus faserverstärktem Kunststoff gibt es zahlreiche Herstellverfahren. Für die Produktion von großen Stückzahlen gut anwendbare Verfahren gibt es derzeit allerdings nur bei rotationssymmetrischen oder platten- bzw. strangförmigen Bauteilen durch Wickeln oder Platten- bzw. Strangpressen.

Komplexere hochwertige 3-D-Strukturen lassen sich dagegen nur sehr aufwändig herstellen, da das Herstellen der benötigten Faservorformlinge schwierig, langsam und teuer ist. Hochwertige Strukturen werden meist mit Endlosfasern hergestellt. Bei vielen Verfahren werden zunächst Faservorformlinge entsprechend der gewünschten dreidimensionalen Bauteilform, sogenannte Preforms hergestellt, die überwiegend aus Fasern bestehen, welche oft in mehreren Lagen übereinander angeordnet sind, um die notwendigen Faserrichtungen zu erzielen. Anschließend werden die Faservorformlinge dann mit dem Matrixmaterial getränkt oder bestrichen, manchmal noch gepresst und zuletzt ausgehärtet. Sowohl für das Herstellen der Faservorformlinge als auch für das Tränken und/oder Aushärten der Bauteile können Formwerkzeuge entsprechend der gewünschten Bauteilform benutzt werden, auf oder in die der Faservorformling oder das Bauteil gelegt und/oder gepresst wird.

Damit die Faservorformlinge eine ausreichende Formstabilität für die Weiterverarbeitung aufweisen, werden sie mit kleinen Mengen Kleber oder Binder versehen und nach dem dreidimensionalen Drapieren fixiert, z.B. durch Trocknung oder durch Erhitzen und Abkühlen.

Die Faservorformlinge werden meist durch Übereinanderlegen und Fixieren von vorgefertigten und vorverbundenen flächigen Halbzeugen erstellt. Solche Halbzeuge sind etwa Tapes oder Gewebe, Gelege oder Vliese, bei denen eine Vielzahl von einzelnen Garnen oder Rovings bereits zu einem flächigen Gebilde verwebt, vernäht oder verklebt sind. Von einem Garn spricht man bei Verwendung sogenannter Endlosfasern, d.h. wenn die Fasern von einer Spule oder aus einem Knäuel abgewickelt werden. Zahlreiche Garne, die unverdreht gleichzeitig von einer Spule oder aus einem Knäuel abgewickelt werden, nennt man Garnbündel oder Roving. Dabei können die Rovings aus bis zu mehreren Zehntausend Einzelgarnen, die auch Filamente genannt werden, bestehen.

Die benötigten Einzelteile werden aus dem flächigen Halbzeug, welches meist als Rollenware zur Verfügung steht, nach einer Art Schnittmuster zugeschnitten, wie es auch aus DE 10 2008 011 658 A1 bekannt ist. Dann werden sie über ein Formwerkzeug gelegt und miteinander verbunden oder verpresst. Ein Beispiel für die Herstellung solcher Halbzeuge durch Verkleben oder Vernähen zeigt ebenfalls DE 10 2008 011 658 A1. Häufig ist trotz allem ein hoher Anteil manueller Tätigkeiten notwendig. Eine Vorrichtung zur maschinellen Herstellung von einfachen eindimensional gekrümmten Vorformlingen mit Abschnitten aus Halbzeug, die in einer Kassette vorgehalten und dann auf einem Kern abgelegt werden, ist aus DE 10 2008 042 574 A1 bekannt. Komplexere Formen sind maschinell noch nicht herstellbar.

Vorrichtungen und Verfahren zur Herstellung von Faservorformlingen sind ebenfalls aus der US 2011/000608 A1 sowie aus der DE 199 22 799 A1 bekannt.

Eine andere Möglichkeit zur Herstellung von Faservorformlingen für komplexere Bauteile ist das automatisierte Faserlegen. Dabei werden schmale Garnbündel oder Bänder aus Garnbündeln von einem Faserlegekopf über dem Formwerkzeug hin und her geführt, und dabei nebeneinander und übereinander darauf abgelegt, angepresst und fixiert. Für komplexere Bauteile ist eine aufwändige roboterartige Steuerung des Faserlegekopfes notwendig. Auch bei Einsatz von zwei, drei oder sogar vier Faserlegeköpfen parallel ist die Fertigungsgeschwindigkeit noch relativ langsam, da die Köpfe oft lange Wege zurücklegen müssen und da sukzessive mit schmalen Faserbündeln gearbeitet wird. Des Weiteren haben sie eine sehr lange und komplizierte Garnnachführung vom Spulengatter zum mehrachsig bewegten Legekopf. Eine solche Garnnachführung in Schläuchen mit speziellen Führungsklingen, um ein Verdrehen der Rovings zu verhindern, ist beispielsweise in US 2008/0202691 A1 dargestellt.

Die Aufgabe der Erfindung ist es, eine Vorrichtung und ein Verfahren zur Herstellung von Faservorformlingen zu schaffen, so dass auch komplexere, hochwertige Strukturen leichter automatisierbar, aber flexibel in der Form und Faserausrichtung, schneller und kostengünstiger gefertigt werden können.

Die Aufgabe wird durch die Vorrichtung mit den Merkmalen gemäß Anspruch 1 gelöst. Weitere vorteilhafte Merkmale sind in den abhängigen Ansprüchen genannt.

Erfindungsgemäß zeichnet sich die Vorrichtung dadurch aus, dass das erste Formwerkzeug eine Drapierposition im Bereich der Verbindungslinien zwischen den Maximalpositionen und den Garnübergabestellen und eine Abfahrposition außerhalb der Verbindungslinien aufweist und dass das erste Formwerkzeug zumindest in der Abfahrposition drehbar und/oder kippbar ist und auch in gedrehter und/oder gekippter Lage in die jeweilige Drapierposition bewegt werden kann. Dadurch können durch einfache, insbesondere lineare, Wege für die Greifer mehrere Garne oder Rovings gleichzeitig aufgespannt werden und trotzdem mehrere Lagen mit verschiedener Ausrichtung nacheinander auf dem Formwerkzeug drapiert werden. Sowohl die Abwickelstationen als auch die Garnführung durch die Greifer kann ortsfest bleiben. Die gewünschte Lagenorientierung im Hinblick auf das spätere Bauteil kann durch die Drehung des Formwerkzeuges erzielt werden. Somit ist eine sehr flexible Gestaltung der Faservorformlinge und trotzdem eine einfache Automatisierung ohne komplizierte Berechnungen der Garnführungswege möglich. Die Vorrichtung ist dadurch so ausgestaltet, dass sie für eine Ablegerate von mehr als 2 kg/min oder sogar mehr als 3 kg/min an Garn- oder Rovingmaterial geeignet ist.

Da auf die sonst üblichen flächigen Halbzeuge verzichtet wird und statt dessen direkt aus Garnen oder Rovings der Faservorformling drapiert und hergestellt wird, sind die Materialkosten gegenüber bekannten Verfahren viel niedriger. Durch die Parallelisierung kann trotzdem eine kurze Herstellzeit erreicht werden. Die flächigen Halbzeuge sind aufgrund der Vorfertigung recht teuer. Bei stark dreidimensionalen Bauteilen besteht bei der Verwendung von großflächigen Halbzeugen zudem noch die Gefahr von Faltenbildung. Bei kleinflächigen steigt andererseits der Aufwand für das Zuschneiden und Verbinden der Einzelteile. Vorteilhafterweise ist ein zweites Formwerkzeug vorgesehen, welches mit dem ersten Formwerkzeug in der Drapierposition zusammengeführt werden kann und eine eigene Abfahrposition aufweist. Somit können auch kompliziertere dreidimensionale Formen genauer hergestellt werden, indem die Schar von Garnen oder Rovings zwischen den beiden Formwerkzeugen drapiert bzw. umgeformt wird. Bevorzugt ist das zweite Formwerkzeug, vom ersten Formwerkzeug aus gesehen, auf der gegenüberliegenden Seite der aufgespannten Garne oder Rovings angeordnet. Die Bewegung in die Drapierposition kann für das zweite Formwerkzeug bevorzugt gleichzeitig mit oder nach dem ersten Formwerkzeug erfolgen. Es kann aber auch vor dem ersten Formwerkzeug erfolgen. Das erste und/oder zweite Formwerkzeug kann auch mehrteilig ausgeführt sein.

Um eine möglichst gute Drapierung in die gewünschte Form zu erzielen, sollte die Bewegungsrichtung zwischen Abfahrposition und Drapierposition des ersten und/oder eines zweiten Formwerkzeuges bevorzugt im Wesentlichen senkrecht zu den Pfaden der Greifer angeordnet sein. Eine Abweichung von bis zu +/- 30° ist dabei denkbar. Bevorzugt sind die Pfade der Greifer in etwa Horizontal und die Bewegungsrichtung des Formwerkzeuges in etwa Vertikal. Für beide Richtungen ist ebenso eine Abweichung von bis zu +/- 30° denkbar. Die Pfade der Greifer stimmen bevorzugt in etwa mit den gespannten Garnen oder Rovings vor dem Drapieren überein.

Besonders vorteilhaft ist es, wenn auch das zweite Formwerkzeug zumindest in der Abfahrposition drehbar und/oder kippbar ist und in gedrehter und/oder gekippter Lage in die Drapierposition bewegt werden kann. Die Drehung und/oder Kippung wird entsprechend der des ersten Formwerkzeuges ausgeführt. So kann nach oder bei dem Drapieren einer weiteren Lage mit anderer Faserorientierung auf dem ersten Formwerkzeug, das zweite Formwerkzeug passend mit dem ersten zusammengeführt werden. Bevorzugt ist das zweite Formwerkzeug als Haube ausgeführt ist, die über das erste Formwerkzeug passt und ein Spalt für die Garne oder Rovings zwischen dem ersten und zweiten Formwerkzeug bleibt.

Damit werden die Garne oder Rovings genau in die gewünschte Form gebracht, das heißt drapiert.

Beim Drapieren kann es wichtig sein, dass die Spannung der Garne oder Rovings eingestellt oder geregelt wird. Falls nötig kann auch nachgeregelt werden, während des Drapierens, zum Beispiel bei sehr stark dreidimensionalen Bauteilen, bei denen die Garne oder Rovings beim Drapieren stark ausgelenkt werden. Deshalb ist es zusätzlich von Vorteil wenn eine Spanneinrichtung zum Einstellen und/oder Regeln der Spannung vorgesehen ist. Besonders bevorzugt eine Spanneinrichtung, die die Spannung beim Drapieren konstant oder in einem vorgegebenen Wertebereich halten kann.

Erfindungsgemäß kann die Drehachse des ersten und/oder eines zweiten Formwerkzeuges im Wesentlichen senkrecht zu den Pfaden und im Wesentlichen parallel zur Bewegungsrichtung zwischen Abfahrposition und Drapierposition des ersten und/ oder zweiten Formwerkzeuges liegt.

Weiterhin kann das erste und/oder ein zweites Formwerkzeug mit einer Heizeinrichtung und/oder einer Anpresseinrichtung ausgestattet sein. Durch Temperatur- oder Druckerhöhung kann ein in der Lage vorhandener Binder aktiviert werden, so dass die Garne oder Rovings in der vorgegebenen Form fixiert und miteinander zunächst zu einer Lage und dann zum Faservorformling verbunden werden. Als Bindermaterial können beispielsweise Fäden oder Vliese, die zumindest teilweise aus Thermoplast oder Klebstoff bestehen, mit drapiert werden. Dadurch wird gleich mit dem Fasermaterial auch das zum Fixieren nötige Bindermaterial aufgebracht. Das Bindermaterial kann auch durch Hybridfäden, die neben Fasermaterial auch Bindermaterial enthalten, oder durch Beschichten oder Besprühen der Garne oder Rovings eingebracht werden. Das Bindermaterial kann auch nach dem Drapieren der Garne und Rovings über einem Formwerkzeug aufgebracht, zum Beispiel aufgesprüht werden. Durch das Fixieren einer Lage von Garnen oder Rovings wird eine gewisse Stabilität erreicht für das Aufbringen einer weiteren Lage von Garnen oder Rovings oder für das Weiterverarbeiten des Faservorformlings.

Damit eine einfache und flexible Anpassung an verschiedene Bauteilformen möglich ist, kann das erste und/oder ein zweites Formwerkzeug leicht trennbar an einer Bewegungseinrichtung, insbesondere einem Hubtisch oder einer Absenkeinrichtung, befestigt sein. So können auch eine oder mehrere Lagen von Garnen oder Rovings zusammen mit einem Formwerkzeug an eine nachfolgende, insbesondere wieder erfindungsgemäß ausgestaltete Vorrichtung weitergegeben werden, um dort eine oder mehrere weitere Lagen aufzubringen.

Die Beschickung der Vorrichtung mit Garnen oder Rovings erfolgt von den Abwickelstationen. Die Abwickelstationen können beispielweise als sogenanntes Spulengatter ausgeführt sein. Dabei können die Garne oder Rovings von Spulen oder aus Garnknäuels (Bobbins) gezogen werden. Jede Garnübergabestelle bekommt Garne oder Rovings von einer oder von mehreren Abwickelstationen. An der Spule oder an der Garnübergabestelle oder dazwischen kann eine Einrichtung zur Regelung oder Einstellung der Garnspannung vorhanden sein.

Bevorzugt ist noch eine Trenneinrichtung, die die Garne oder Rovings zwischen einem Formwerkzeug und den Greifern trennen kann, und/oder eine Trenneinrichtung, die die Garne oder Rovings zwischen einem Formwerkzeug und den Garnübergabestellen trennen kann, vorgesehen.

Weiterhin ist es vorteilhaft, wenn die Greifer verschiedene individuelle Zwischenpositionen auf ihrem Pfad einnehmen können und diese die jeweiligen Anfänge der Garne oder Rovings an diesen Zwischenpositionen festhalten können. Dadurch können unterschiedliche Formen nachgebildet werden. Und es wird von jedem Greifer nur soviel Garn aufgespannt, wie für die entsprechende Stelle der Form benötigt wird. Auch von Vorteil ist es, wenn die einzelnen Greifer einer Außenkontur eines Formwerkzeuges folgend auf ihrem Pfad positioniert werden können. Das heißt, dass die Greifer die Anfänge der Garne oder Rovings so festhalten, dass sie möglichst nahe an der Stelle sind, an der der Faservorformling seinen Rand haben wird, an dem die Garne nach dem Formen am Formwerkzeug getrennt werden. Die Greifer werden also dort positioniert, wo die jeweiligen Garne oder Rovings das Formwerkzeug verlassen, wenn es in die Position zum Formen bewegt wurde, oder bei mehrteiligen Formwerkzeugen, wenn die Formwerkzeuge zusammengefahren wurden. Dadurch entsteht auch bei komplexen Strukturen nur sehr wenig Verschnitt an teurem Fasermaterial, was besonders bei der Serienfertigung wichtig ist.

Die Aufgabe wird durch das Verfahren mit den Merkmalen entsprechend Anspruch 10, in Verbindung mit einer Vorrichtung nach einem der Vorrichtungsansprüche, gelöst. Weitere vorteilhafte Merkmale für das Verfahren sind in den abhängigen Ansprüchen genannt.

Erfindungsgemäß zeichnet sich das Verfahren dadurch aus, dass das Drapieren jeweils durch Hineinfahren des ersten Formwerkzeugs in den Bereich der gespannten Garne oder Rovings erfolgt und dass das erste Formwerkzeug nach dem Abtrennen der Garne oder Rovings der ersten Lage und vor dem Drapieren der weiteren Lage gedreht und/oder gekippt wird. Es ergeben sich die bereits bei der Beschreibung der erfindungsgemäßen Vorrichtung genannten Vorteile.

Von Vorteil ist es, wenn das Spannen so erfolgt, dass mehrere separate Greifer an mehreren jeweils den einzelnen Greifern zugeordneten Garnübergabestellen einzelne oder mehrerer Garne oder Rovings greifen, dass die Greifer dann zueinander auf im Wesentlichen parallelen Pfaden bewegt werden und dass die Garne oder Rovings dadurch nebeneinander aufgespannt werden. Weiterhin ist es vorteilhaft, wenn mehrere Greifer in einem Spannvorgang gleichzeitig und unabhängig voneinander bewegt werden können. Dadurch können die Garne oder Rovings schnell parallel aufgespannt werden und trotzdem kann jeder Greifer unabhängig arbeiten.

Bevorzugt erfolgt die Drehung um eine Achse, die im Wesentlichen senkrecht zu den gespannten Garnen oder Rovings und im Wesentlichen parallel zur Bewegungsrichtung beim Hineinfahren liegt. Weiterhin ist es vorteilhaft, wenn das erste Formwerkzeug um einen Winkel zwischen 10 und 170°, bevorzugt zwischen 30 und 150°, besonders bevorzugt zwischen 45 und 135° gedreht wird. Ebenso kann das zweite Formwerkzeug um einen Winkel zwischen 10 und 170°, bevorzugt zwischen 30 und 150°, besonders bevorzugt zwischen 45 und 135° gedreht werden.

Weiterhin ist es von Vorteil, zwischen dem Drapieren der ersten Lage und dem Spannen für die weitere Lage die erste Lage zu fixieren, insbesondere durch Erhitzen und/oder Pressen. Dadurch bekommt sie eine ausreichende Stabilität für die weiteren Verfahrensschritte oder die Weiterverarbeitung. Bevorzugt kann jede Lage nach dem Drapieren, insbesondere auch der Faservorformling nach dem Drapieren der letzten Lage fixiert werden. Dies geschieht, wie genannt, zum Beispiel durch Aktivieren des Bindermaterials.

Das Fixieren kann direkt beim Drapieren, das heißt beim Hineinfahren des ersten oder zweiten Formwerkzeuges beginnen oder danach. Das Abtrennen der Garne oder Rovings kann während des Fixierens oder nach dem Fixieren erfolgen.

Eine genauere Formgebung ist dadurch möglich, dass beim Drapieren ein zweites Formwerkzeug, insbesondere eine Haube, mit dem ersten Formwerkzeug so zusammengefahren wird, dass die jeweilige Lage geformt wird und gegebenenfalls fixiert wird.

Um einen Faservorformling mit mehreren Lagen in unterschiedlicher Faserorientierung herzustellen kann jeweils dieselbe Vorrichtung für das Drapieren der ersten und der weiteren Lage verwendet werden. Zwischen dem Drapieren der Lagen wird das Formwerkzeug entsprechend gedreht und/oder gekippt.

Es kann aber auch eine Art Fertigungsstrasse mit zwei oder mehreren Vorrichtungen vorgesehen werden, bei der das Drapieren der ersten Lage in einer Vorrichtung erfolgt, das erste Formwerkzeug danach an eine weitere Vorrichtung übergeben wird und in der weiteren Vorrichtung die weitere Lage drapiert wird. Die Drehung und/oder Kippung des Formwerkzeuges mit der darauf befindlichen Lage kann in der ersten oder in der weiteren Vorrichtung erfolgen. So können auch mehrere Lagen hintereinander in mehreren Vorrichtungen aufgebracht werden, bis der Faservorformling fertig ist. Bevorzugt wird hierbei in jeder Vorrichtung eine Lage aufgebracht und insbesondere auch fixiert.

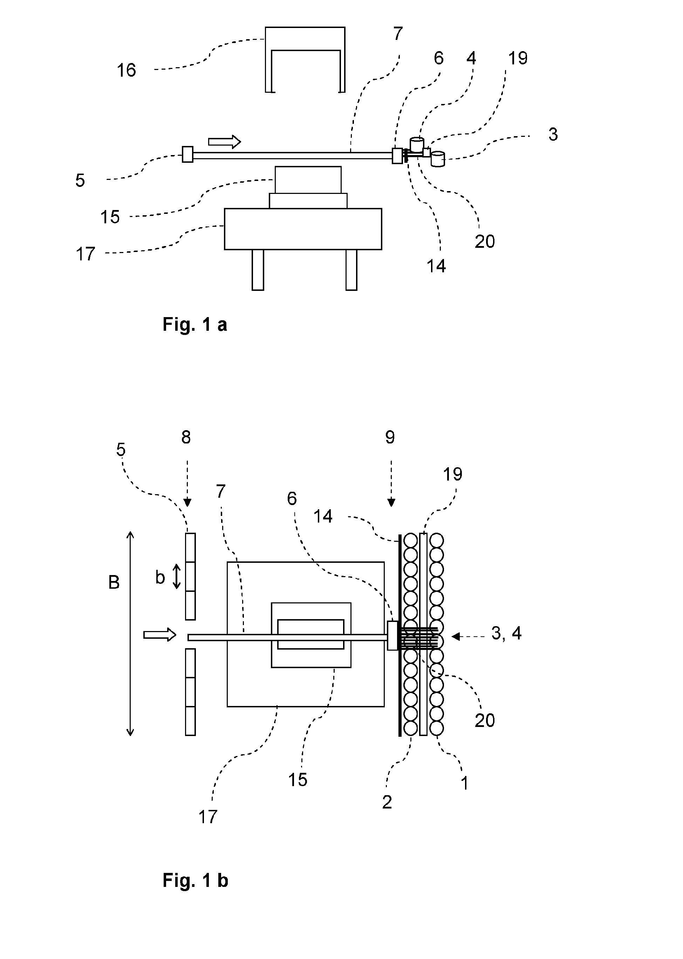

Anhand von Ausführungsbeispielen werden weitere vorteilhafte Merkmale der Erfindung erläutert unter Bezugnahme auf die Zeichnungen. Sie zeigen in den **Figuren 1** **a - 7 b** eine bevorzugte Ausführungsform der erfindungsgemäßen Vorrichtung bei verschiedenen Verfahrensschritten:
- **Fig. 1a**: Seitenansicht während Greifer Garne oder Rovings holt
- **Fig. 1b**: Draufsicht während Greifer Garne oder Rovings holt
- **Fig. 2a**: Seitenansicht nach Spannen der Garne oder Rovings
- **Fig. 2b**: Draufsicht nach Spannen der Garne oder Rovings
- **Fig. 3a**: Seitenansicht nach einem ersten Drapierschritt der ersten Lage
- **Fig. 3b**: Draufsicht nach einem ersten Drapierschritt der ersten Lage

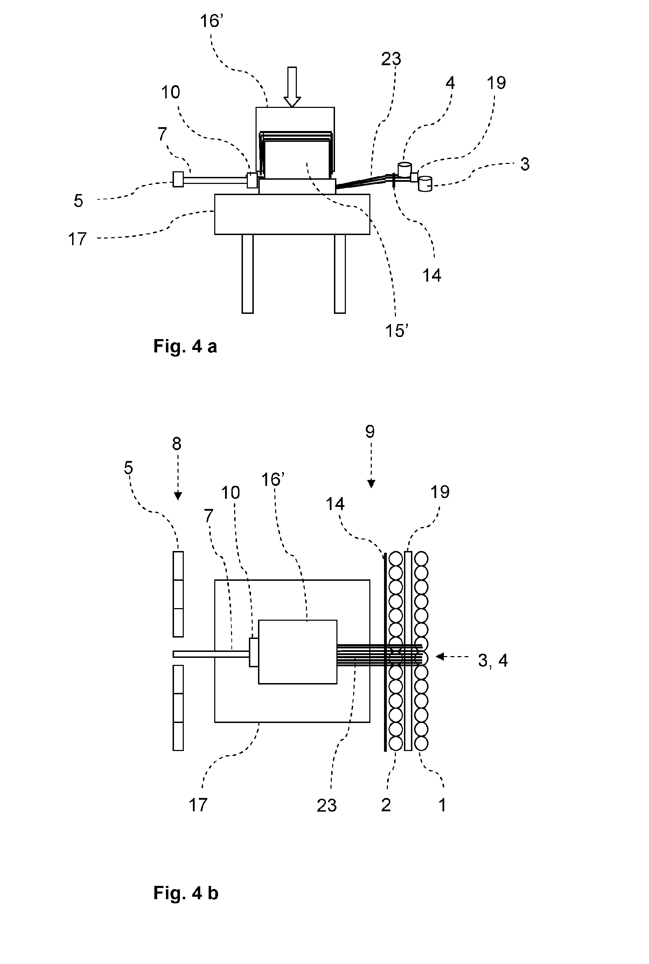

- **Fig. 4a**: Seitenansicht nach einem zweiten Drapierschritt der ersten Lage
- **Fig. 4b**: Draufsicht nach einem zweiten Drapierschritt der ersten Lage
- **Fig. 5a**: Seitenansicht nach dem Abtrennen der Garne oder Rovings
- **Fig. 5b**: Draufsicht nach dem Abtrennen der Garne oder Rovings
- **Fig. 6a**: Seitenansicht nach Drehen der Formwerkzeuge und während Greifer Garne oder Rovings für die zweite Lage holen
- **Fig. 6b**: Draufsicht nach Drehen der Formwerkzeuge und während Greifer Garne oder Rovings für die zweite Lage holen
- **Fig. 7a**: Seitenansicht nach einem zweiten Drapierschritt der zweiten Lage
- **Fig. 7b**: Draufsicht nach einem zweiten Drapierschritt der zweiten Lage
und in den **Figuren 8** **a - c** eine weitere bevorzugte Ausfühungsform der erfindungsgemäßen Vorrichtung bei verschiedenen Verfahrensschritten:
- **Fig. 8a**: Draufsicht nach Aufbringen der ersten Lage
- **Fig. 8b**: Draufsicht nach Aufbringen einer weiteren Lage
- **Fig. 8c**: Draufsicht nach Aufbringen noch einer weiteren Lage.

Nachfolgend werden die Figuren und die Ausführungsbeispiele detaillierter beschrieben.

In einer besonders bevorzugten Ausführungsform der Vorrichtung und des Verfahrens ist die Vorrichtung geeignet dazu bzw. werden von der Vorrichtung die folgenden Verfahrensschritte nacheinander oder teilweise parallel zueinander ausgeführt:
- Bereitstellen der Garne oder Rovings und eventuell des Bindermaterials
- Greifen der benötigten Garne oder Rovings und eventuell des Bindermaterials
- Spannen der benötigten Garne oder Rovings durch entsprechendes Positionieren der Greifer
- Erstes Drapieren über ein erstes Formwerkzeug
- Zweites Drapieren mit einem zweiten Formwerkzeug
- Fixieren der Lage aus Garnen oder Rovings
- Abtrennen der Garne oder Rovings auf beiden Seiten der Formwerkzeuge
- Rückspulen der ausgegebenen und nicht benötigten Garne oder Rovings
- Öffnen der Formwerkzeuge
- Drehen und/oder Weitergeben eines Formwerkzeuges mit der aufgebrachten Lage

Wiederholung des Ablaufes für das Aufbringen weiterer Lagen in derselben Vorrichtung oder in einer oder mehreren weiteren erfindungsgemäßen Vorrichtungen bis zur Fertigstellung des Faservorformlings.

Als Fasermaterial für die Garne oder Rovings können Fasern z.B. aus Kohlenstoff (Carbon), Glas, oder Aramid oder andere Fasern verwendet werden. Und als Matrixmaterial für den faserverstärkten Kunststoff kommen z.B. thermoplastischer oder duroplastischer Kunststoff, Epoxidharz, anderer Kunststoff (Polymere) oder anderes Harz in Frage. Als Bindermaterial kann thermoplastischer Kunststoff oder Klebstoff verwendet werden. Es kann entweder bereits als Hybridgarn oder Hybrid-Roving vorliegen, d.h. einzelne Fasern oder Garne sind aus Bindermaterial, oder es kann zusammen mit den Garnen oder Rovings vom Greifer mit aufgespannt werden oder es wird auf die drapierten Garne oder Rovings aufgebracht oder aufgesprüht.

In **Fig. 1a** und **1b** ist der grundsätzliche Aufbau der Vorrichtung zu sehen. Die Bereitstellung der Garne oder Rovings erfolgt über eine Vielzahl von Abwickelstationen, in denen das Fasermaterial in Form von Spulen oder Garnknäuel (sogenannte Bobbins) bereitgestellt wird, und die in mehreren Reihen 1,2 nebeneinander, hintereinander oder übereinander angeordnet sind. Die Spulen können auch, wie gezeigt in Fig.1a eine obere und eine untere Reihe bilden. Die Anfänge der Garne oder Rovings 20 sind nur im jeweils benutzten Bereich für die benutzten Abwickelstationen 3,4 schematisch dargestellt. Auch alle anderen Anfänge werden zu den entsprechenden Garnübergabestellen 14 eingefädelt, so dass sie von den zugehörigen Greifern in den Abholpositionen 9 erfasst werden können. So etwas bezeichnet man zusammen auch als Spulengatter.

Auf der anderen Seite sind die Greifer 5 in ihren Maximalpositionen 8, die in diesem Fall auch den Ausgangspositionen entsprechen, dargestellt. Die Klemmbreite eines Greifers ist b und die Gesamtklemmbreite aller Greifer ist B. Auch wenn nur gleichbreite Greifer dargestellt sind, so sind selbstverständlich auch Greifer mit unterschiedlichen Breiten möglich. Die Greifer müssen auch nicht unbedingt ihre Maximal- und Abholpositionen in einer Linie haben. Weiterhin sind ein erstes Formwerkzeug 15 auf einem Hubtisch 17 und ein zweites Formwerkzeug 16, das als Haube ausgeführt ist, in Abfahrposition also außerhalb der Pfade der Greifer dargestellt. Das zweite Formwerkzeug ist in der Draufsicht nicht dargestellt. Und eine entsprechende Bewegungs- oder Absenkeinrichtung für das zweite Formwerkzeug ist auch nicht extra dargestellt. Weiterhin gibt es einen Bindermaterialvorrat 19, der beispielsweise zwischen den Reihen der Abwickelstationen angeordnet sein kann.

Ein Greifer 6 befindet sich in Abholposition und holt die seiner Anordnung in der Vorrichtung entsprechenden Garne oder Rovings, indem er deren Anfänge greift. Der Greifer ist durch eine Führungsvorrichtung 7, z.B. ein Gestänge oder einen Kolben, verschiebbar. Die Greifer können sich einzeln, aber nur linear und auf parallelen Pfaden nebeneinander zwischen Abhol- und Maximalposition bewegen, dadurch ist eine einfach Automatisierung und eine schnelle parallele Bewegung möglich. Es können wie dargestellt mehrere Abwickelstationen zu einer Gruppe zusammengefasst und einem Greifer zugeordnet werden. Ein Greifer kann mehrere Garne oder Rovings zusammen greifen. Auf jeden Fall sollten mindestens so viele Abwickelstationen wie Greifer vorgesehen sein.

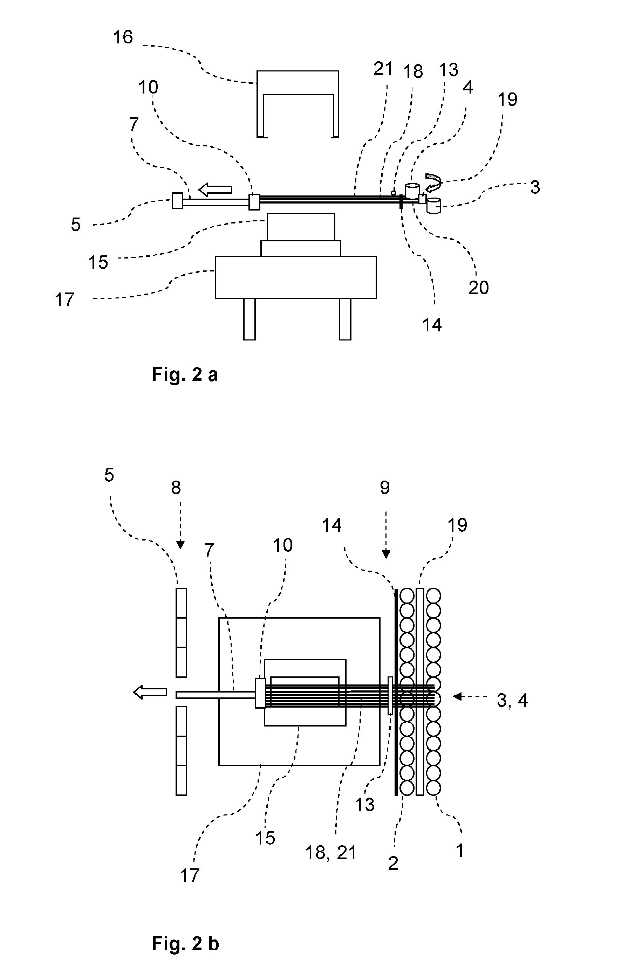

**Fig. 2a** und **2b** stellen die aufgespannten Garne oder Rovings 21 dar, die der Greifer 10 durch das Verfahren in seine Zwischenposition herausgezogen hat. Das kann durch ein aktiv angetriebenes Abwickeln unterstützt werden. Die Zwischenposition befindet sich nahe an der Außenkontur der Formwerkzeuge bzw. nahe der späteren Lage der Außenkontur, wenn die Formwerkzeuge in ihre Drapierposition gebracht sind. Zusammen mit den Garnen oder Rovings kann auch Bindermaterial 18, beispielsweise in Form von Binderfäden oder Bindervliesen, vom Greifer mit aufgespannt werden. Es kann auch wie dargestellt eine obere und eine untere Reihe von Abwickelstationen geben, so dass das Bindermaterial zwischen der oberen und der unteren Schar von Garnen oder Rovings aufgespannt wird. Beim Herausziehen kann das Bindermaterial im Bereich der Garnübergabestellen 14, insbesondere durch eine Heizeinrichtung, voraktiviert werden, so dass die Garne oder Rovings gleich beim Beginn des Drapierens schon etwas aneinander fixiert sind. Außerdem kann im Bereich der Garnübergabestellen eine Spreizeinrichtung vorgesehen sein, die als eine Art Kamm mit einer oder mehreren Reihen von Zinken ausgeführt sein kann. So wird gewährleistet, dass die Garne oder Rovings flächendeckend nebeneinander liegen und auch beim späteren Drapieren nicht seitlich verrutschen. Die Spreizeinrichtung kann auch entlang der Garnwege oder entlang der Greiferpfade verschiebbar sein. Dargestellt ist noch eine Möglichkeit für eine Garnspannungsmesseinrichtung 13.

Unter Drapieren wird das Umformen bzw. in Form bringen der Garne oder Rovings mithilfe eines Formwerkzeuges verstanden. Das Drapieren kann in einer oder in mehreren Stufen erfolgen, indem das oder die Formwerkzeuge gleichzeitig oder nacheinander in die Lage aus aufgespannten Garnen oder Rovings hineinbewegt werden. Während des Drapierens ist es von Vorteil die Garnspannungen zu regeln, insbesondere konstant zu halten. D.h. es wird soviel Garn oder Roving ausgegeben, wie für das Drapieren an der entsprechenden Stelle des Formwerkzeuges notwendig ist. Um das zu erreichen können Brems- und Kupplungseinrichtungen vorgesehen sein. Bevorzugt ist jeder Abwickelstation oder jeder Gruppe von Abwickelstationen eine entsprechende Regelung zugeordnet. Damit wird verhindert, dass die Garne oder Rovings überbelastet oder zu lose verlegt werden. Die Garnspannungen können auch durch geeignete Messeinrichtungen im Bereich der Garnübergabestellen und/oder zwischen den Abwickelstationen und den Garnübergabestellen gemessen werden. Bevorzugt liegt der Wert der Garnspannungen zwischen 1 und 50 N/m².

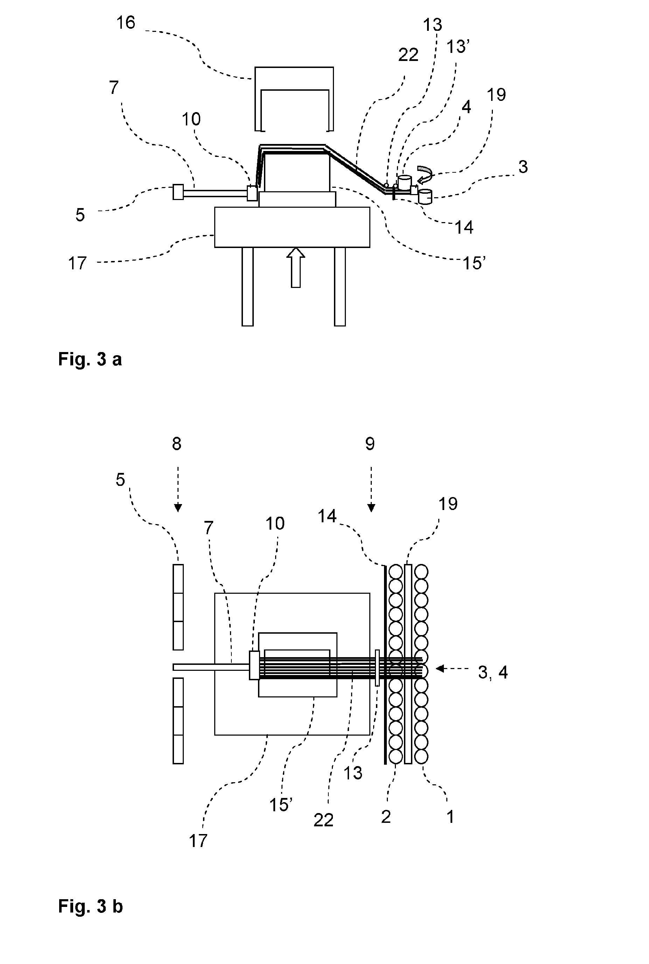

In den **Fig. 3a** und **3b** ist der Zustand nach dem ersten Drapieren dargestellt. Vom Hubtisch 17 wurde das erste Formwerkzeug 15' in die Drapierposition bewegt. Dadurch werden die Garne oder Rovings 22 ausgelenkt und über das Formwerkzeug 15' drapiert. Der Greifer 10 fixiert die Anfänge der Garne nahe der Außenkontur des Formwerkzeuges 15'. Nach diesem Schritt kann alternativ oder zusätzlich Bindermaterial auf die Garne oder Rovings aufgebracht oder aufgesprüht werden.

Im nächsten Schritt werden die Garne oder Rovings mithilfe des zweiten Formwerkzeuges 16', das in seine Drapierposition bewegt wurde, weiter drapiert bzw. umgeformt (**Fig**. **4a** und **4b**). Durch das Zusammenwirken der beiden Formwerkzeuge, zwischen denen sich die Lage an Garnen oder Rovings befindet, ist eine genaue Formgebung möglich. Die Formwerkzeuge können auch zusammengepresst werden und eines, bevorzugt das zweite, oder beide Formwerkzeuge können beheizt sein, so dass das Bindermaterial aktiviert wird und die Garne oder Rovings formstabil zu einer Lage fixiert werden. Gleichzeitig mit oder nach dem Fixieren werden die Garne oder Rovings an beiden Seiten der Formwerkzeuge abgetrennt, also zwischen Greifer und Formwerkzeug und zwischen Garnübergabestellen und Formwerkzeug. In einer Ausführungsform kann die Trenneinrichtung mit dem ersten oder zweiten Formwerkzeug verbunden sein. Vorteilhaft ist es, wenn die Trennung zumindest auf der Seite der Garnübergabestellen nahe am Formwerkzeug erfolgt. Dadurch fällt wenig Verschnitt an teurem Fasermaterial an und es ist weniger Nachbearbeitung des Faservorformlings nötig.

Die abgetrennten Garne oder Rovings 23 können über eine Rückspuleinrichtung wieder zurückgezogen und aufgewickelt oder über entsprechende Garnführung zwischengespeichert werden. Das Rückspulen erfolgt so, dass wieder Anfänge der Garne oder Rovings im Bereich der Garnübergabestellen 14 so zu liegen kommen, dass sie von den Greifern abgeholt werden können, ohne dass allzu viel Verschnittmaterial anfällt. Zur Erfassung der Anfänge können Sensoren eingesetzt werden.

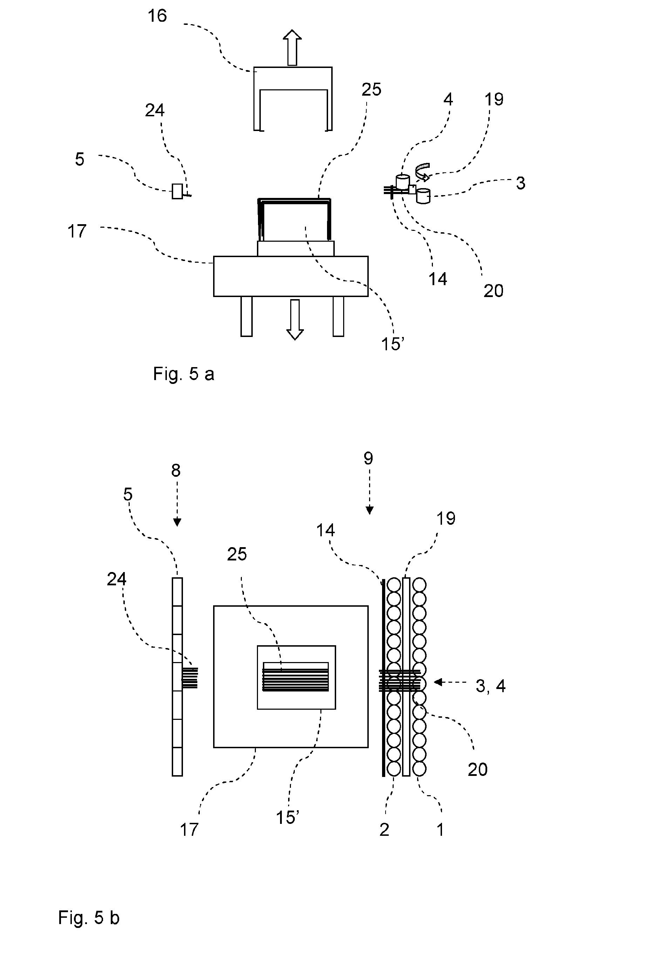

In **Fig. 5a** und **5b** sind die Garne oder Rovings bereits zurückgespult oder an der Garnübergabestelle abgeschnitten worden, so dass sich wieder Anfänge an den Garnübergabestellen befinden. An den Greifern entsteht auch nur wenig Verschnitt 24 an Fasermaterial , da sie jeweils nahe und entlang der Außenkontur der Formwerkzeuge positioniert waren und nur soviel Garn aufgespannt haben, wie auch gebraucht wurde. Die Formwerkzeuge 15,16 werden wieder in ihre Abfahrposition gebracht. Auf dem ersten Formwerkzeug verbleibt die erste geformte Lage 25.

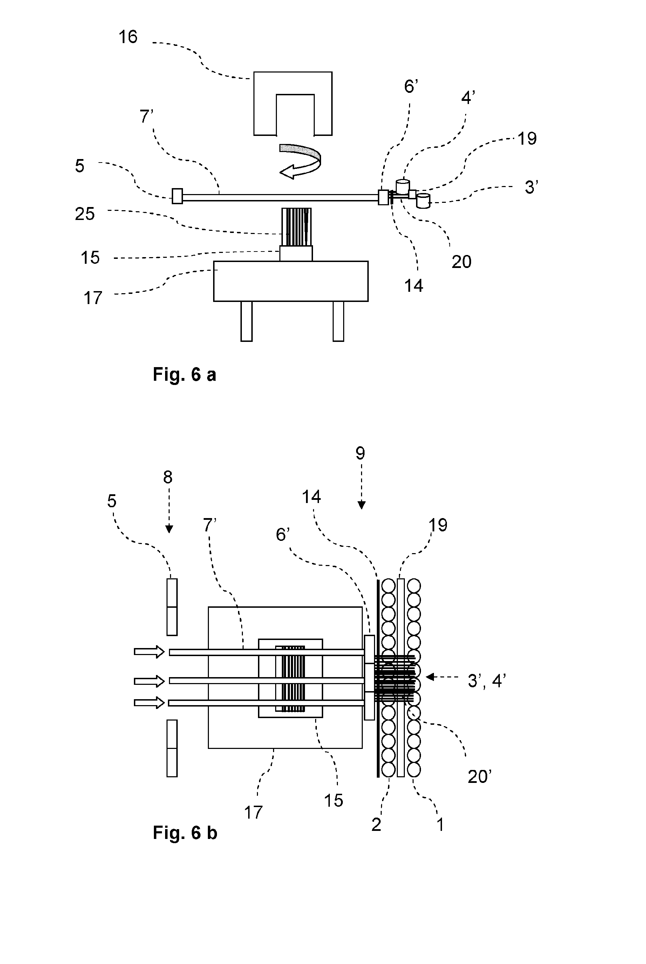

**Fig. 6a** und **6b** zeigen das erste und zweite Formwerkzeug 15,16 in gedrehter Lage. Hier wurden sie um 90° gedreht. Es ist aber auch ein anderer Drehwinkel beispielsweise etwa 30°, 45°, 60°, oder eine Kippung möglich. Bevorzugt liegt der Drehwinkel zwischen 10 und 170°. Das richtet sich danach, wie und mit welcher Faserorientierung die weitere Lage an Garnen oder Rovings aufgebracht werden soll. Die benötigten Greifer 6' sind in der Abholposition, um die Anfänge 20 der benutzten Garne oder Rovings zu greifen.

Dann werden die Garne oder Rovings der weiteren Lage aufgespannt bis zu einer Zwischenposition der Greifer und drapiert, indem das erste und das zweite Formwerkzeug 15', 16' in die Drapierposition gefahren werden.

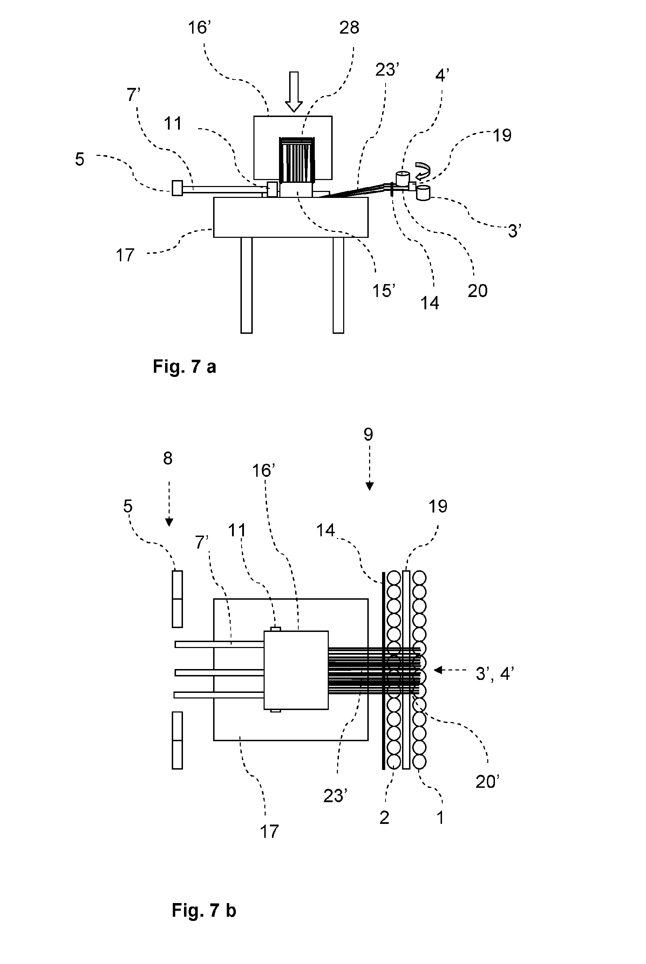

**Fig. 7a** und **7b** zeigen die Vorrichtung nachdem die Garne oder Rovings abgetrennt wurden. Die benutzen Greifer 11 stehen in einer Zwischenposition. Bei nicht rechteckigen Formwerkzeugen oder anderen Drehwinkeln können die Greifer 11 auch auf verschiedenen Zwischenpositionen stehen. Die weitere Lage aus Garnen oder Rovings und eventuell aus Bindermaterial kann ebenfalls durch Erwärmen und/oder Pressen formstabil fixiert und mit der ersten Lage verbunden werden. Zusammen bilden sie den Faservorformling 28.

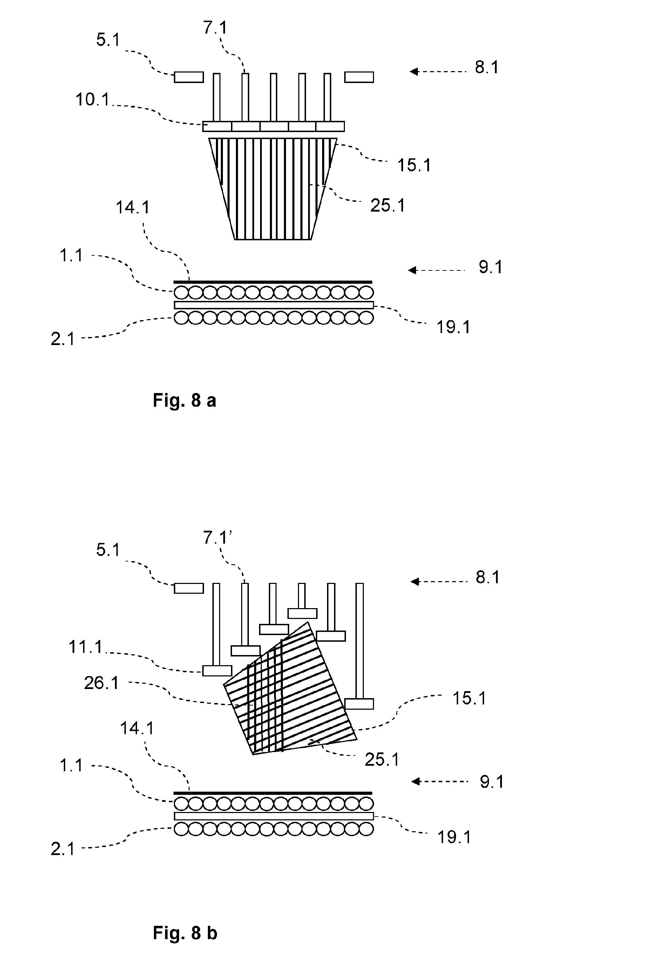

In **Fig. 8a** ist eine weitere Ausführungsform dargestellt, wie sie zum Beispiel bei der Herstellung von Faservorformlingen für Motorhauben Verwendung finden kann. Die benutzten Greifer 10.1 stehen auf einer Zwischenposition, die nicht benötigten Greifer 5.1 sind in der Maximalposition 8.1. Auf dem ersten Formwerkzeug 15.1 ist eine erste Lage an Garnen oder Rovings drapiert und fixiert. Das zweite Formwerkzeug ist nicht dargestellt. Die Bevorratung der Garne oder Rovings erfolgt in den Abwickelstationen 1.1, 2.1. Weiterhin sind ein Bindermaterialvorrat 19.1 und die Garnübergabestellen 14.1 vorhanden.

Das Aufbringen einer oder mehrerer weiterer Lagen kann in derselben Vorrichtung erfolgen oder in einer oder mehreren weiteren erfindungsgemäßen Vorrichtungen, an die das erste Formwerkzeug zusammen mit der ersten Lage übergeben wird. In **Fig. 8b** ist eine weitere Lage 26.1 auf das gedrehte Formwerkzeug drapiert. Es sind der Übersicht halber nur ein paar Garne oder Rovings dargestellt. Die benutzten Greifer 11.1 stehen entlang der Außenkontur des Formwerkzeuges und bilden es möglichst genau ab. Für eine noch genauere Anpassung können schmälere oder auch unterschiedlich breite Greifer eingesetzt werden.

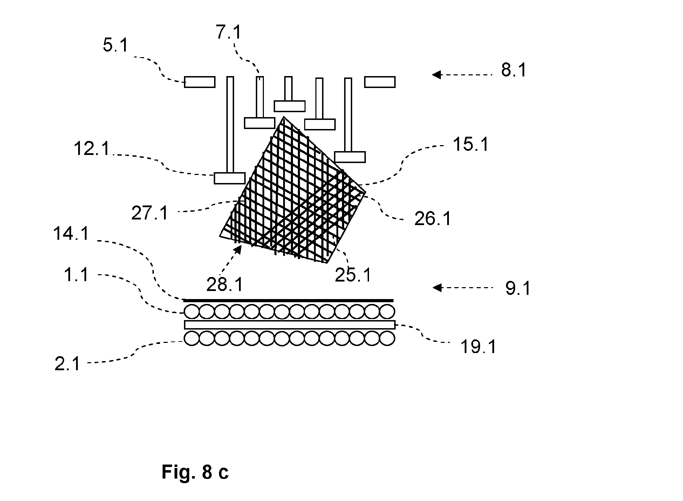

**Fig. 8c** zeigt wie noch eine weitere Lage aufgebracht wurde. Die benutzten Greifer 12.1 stehen wieder entlang der Außenkontur. Nach dem Fixieren bilden die Lagen zusammen den Faservorformling 28.1.

### Bezugszeichenliste

- 1, 1.1 ,2 , 2.1: Reihen von Abwickelstationen
- 3, 3', 4, 4': Abwickelstationen in Benutzung
- 5, 5.1: Reihe von Greifern
- 6, 6': Greifer in Abholposition
- 7, 7.1, 7', 7.1': Führungsvorrichtung für Greifer
- 8, 8.1: Lage der Maximalpositionen
- 9, 9.1: Lage der Abholpositionen
- 10, 10.1, 11, 11.1, 12, 12.1: Greifer in Zwischenpositionen
- 13, 13': Messeinrichtung für Garn-Spannung
- 14, 14.1: Garnübergabestellen
(gegebenenfalls auch mit Spreizeinrichtung und/oder mit Einrichtung zur Bindervoraktivierung)
- 15: erstes Formwerkzeug in Abfahrposition
- 15', 15.1: erstes Formwerkzeug in Drapierposition
- 16: zweites Formwerkzeug in Abfahrposition
- 16': zweites Formwerkzeug in Drapierposition
- 17: Hubtisch
- 18: Bindermaterial
- 19, 19.1: Bindermaterialvorrat
- 20, 20': Anfänge der Garne oder Rovings
- 21: gespannte Garne oder Rovings
- 22: drapierte Garne oder Rovings
- 23, 23': abgetrennte Garne oder Rovings
- 24: Verschnitt
- 25: erste Lage von Garnen oder Rovings
- 26.1, 27.1: weitere Lage von Garnen oder Rovings
- 28, 28.1: Faservorformling
- b: Klemmbreite eines Greifers
- B: Gesamtklemmbreite aller Greifer

## Patentansprüche

1. Vorrichtung zur Herstellung von Faservorformlingen (28, 28.1), die insbesondere eine Vorstufe bei der Herstellung von faserverstärkten Kunststoff-Bauteilen darstellen, wobei die Vorrichtung mehrere Abwickelstationen (1, 1.1, 2, 2.1, 3, 3', 4, 4') für die Bereitstellung mehrerer Garne oder Rovings, mehrere Greifer (5, 5.1), die jeweils einzelne oder mehrere Garne oder Rovings (20,20') an ihrem Anfang greifen können, und wenigstens ein erstes Formwerkzeug (15, 15', 15.1) aufweist, wobei jeder Greifer (5, 5.1) auf einem Pfad zwischen einer Maximalposition (8, 8.1) und einer Abholposition (9, 9.1) hin und her bewegbar ist, und wobei die Abholposition (9, 9.1) an einer Garnübergabestelle (14, 14.1) vorgesehen ist und näher an der Abwickelstation (1, 1.1, 2, 2.1, 3, 3', 4, 4') ist als die Maximalposition (8, 8.1),
**dadurch gekennzeichnet,**
**dass** das erste Formwerkzeug (15, 15', 15.1) eine Drapierposition im Bereich der Verbindungslinien zwischen den Maximalpositionen (8, 8.1) und den Garnübergabestellen (14, 14.1) und eine Abfahrposition außerhalb der Verbindungslinien aufweist und dass das erste Formwerkzeug (15, 15', 15.1) zumindest in der Abfahrposition drehbar und/oder kippbar ist und auch in gedrehter und/oder gekippter Lage in die jeweilige Drapierposition bewegt werden kann.

2. Vorrichtung nach Anspruch 1
**dadurch gekennzeichnet,**
**dass** ein zweites Formwerkzeug (16, 16') vorgesehen ist, welches mit dem ersten Formwerkzeug (15, 15', 15.1) in der Drapierposition zusammengeführt werden kann und eine eigene Abfahrposition aufweist.

3. Vorrichtung nach einem der vorherigen Ansprüche
**dadurch gekennzeichnet,**
**dass** die Bewegungsrichtung zwischen Abfahrposition und Drapierposition des ersten und/oder eines zweiten Formwerkzeuges (15, 15', 15.1, 16, 16') im Wesentlichen senkrecht zu den Pfaden angeordnet ist.

4. Vorrichtung nach Anspruch 2
**dadurch gekennzeichnet,**
**dass** das zweite Formwerkzeug (16, 16') zumindest in der Abfahrposition drehbar und/oder kippbar ist und in gedrehter und/oder gekippter Lage in die Drapierposition bewegt werden kann.

5. Vorrichtung nach Anspruch 2
**dadurch gekennzeichnet,**
**dass** das zweite Formwerkzeug (16, 16') als Haube ausgeführt ist, die über das erste Formwerkzeug (15, 15', 15.1) passt und ein Spalt für die Garne oder Rovings zwischen dem ersten und zweiten Formwerkzeug bleibt.

6. Vorrichtung nach einem der vorherigen Ansprüche
**dadurch gekennzeichnet,**
**dass** die Drehachse des ersten und/ oder eines zweiten Formwerkzeuges (15, 15', 15.1, 16, 16') im Wesentlichen senkrecht zu den Pfaden und im Wesentlichen parallel zur Bewegungsrichtung zwischen Abfahrposition und Drapierposition liegt.

7. Vorrichtung nach einem der vorherigen Ansprüche
**dadurch gekennzeichnet,**
**dass** das erste und/oder ein zweites Formwerkzeug ( 15, 15', 15.1, 16, 16') mit einer Heizeinrichtung ausgestattet sind.

8. Vorrichtung nach einem der Ansprüche 2 bis 7
**dadurch gekennzeichnet,**
**dass** das erste und zweite Formwerkzeug ( 15, 15', 15.1, 16, 16') mit einer Anpresseinrichtung ausgestattet sind.

9. Vorrichtung nach einem der vorherigen Ansprüche
**dadurch gekennzeichnet,**
**dass** das erste und/oder ein zweites Formwerkzeug ( 15, 15', 15.1, 16, 16') leicht trennbar an einer Bewegungseinrichtung, insbesondere einem Hubtisch oder einer Absenkeinrichtung, befestigt sind.

10. Verfahren zur Herstellung von Faservorformlingen (28, 28.1), die beispielsweise eine Vorstufe bei der Herstellung von faserverstärkten Kunststoff-Bauteilen darstellen, unter Verwendung einer Vorrichtung nach einem der vorherigen Ansprüche, welches folgende Verfahrensschritte nacheinander aufweist:
- Spannen von Garnen oder Rovings für eine erste Lage mithilfe mehrerer Greifer (5, 5.1)
- Drapieren der ersten Lage über ein erstes Formwerkzeug (15, 15', 15.1)
- Abtrennen der Garne oder Rovings der ersten Lage
- Spannen von Garnen oder Rovings für eine zweite Lage mithilfe mehrerer Greifer (5, 5.1)
- Drapieren einer weiteren Lage über das erste Formwerkzeug (15, 15', 15.1)
- Abtrennen der Garne oder Rovings der zweiten Lage
**dadurch gekennzeichnet,**
**dass** das Drapieren durch Hineinfahren des ersten Formwerkzeugs (15, 15', 15.1) in den Bereich der gespannten Garne oder Rovings erfolgt und dass das erste Formwerkzeug (15, 15', 15.1) nach dem Abtrennen der Garne oder Rovings der ersten Lage und vor dem Drapieren der weiteren Lage gedreht und/oder gekippt wird.

11. Verfahren nach Anspruch 10
**dadurch gekennzeichnet,**
**dass** die Drehung um eine Achse erfolgt, die im Wesentlichen senkrecht zu den gespannten Garnen oder Rovings (21) und im Wesentlichen parallel zur Bewegungsrichtung beim Hineinfahren liegt.

12. Verfahren nach Anspruch 10 oder 11
**dadurch gekennzeichnet,**
**dass** das erste Formwerkzeug (15, 15', 15.1) um einen Winkel zwischen 10 und 170°, bevorzugt zwischen 30 und 150°, besonders bevorzugt zwischen 45 und 135° gedreht wird.

13. Verfahren nach einem der Ansprüche 10 bis 12
**dadurch gekennzeichnet,**
**dass** zwischen dem Drapieren der ersten Lage und dem Spannen für die weitere Lage eine Fixierung der ersten Lage erfolgt, insbesondere durch Erhitzen und/oder Pressen.

14. Verfahren nach einem der Ansprüche 10 bis 13
**dadurch gekennzeichnet,**
**dass** beim Drapieren ein zweites Formwerkzeug (16, 16'), insbesondere eine Haube, mit dem ersten Formwerkzeug (15, 15', 15.1) so zusammengefahren wird, dass die jeweilige Lage geformt wird.

15. Verfahren nach einem der Ansprüche 9 bis 14
**dadurch gekennzeichnet,**
**dass** das Drapieren der ersten und der weiteren Lagen (25, 25.1, 26.1, 27.1) in derselben Vorrichtung erfolgt.

## Claims

1. Device for manufacturing fibrous preforms (28, 28.1) which in particular represent a preliminary stage in the manufacture of fibre-reinforced plastics components, wherein the device has a plurality of unwinding stations (1, 1.1, 2, 2.1, 3, 3', 4, 4') for providing a plurality of yarns or rovings, a plurality of grippers (5, 5.1) which in each case may grip individual or a plurality of yarns or rovings (20, 20') at the leading end thereof, and at least one first forming tool (15, 15', 15.1) wherein each gripper (5, 5.1) is movable to and fro on a path between a maximum position (8, 8.1) and a collecting position (9, 9.1), and wherein the collecting position (9, 9.1) is provided at a yarn-transfer point (14, 14.1) and is closer to the unwinding station (1, 1.1, 2, 2.1, 3, 3', 4, 4') than the maximum position (8, 8.1), **characterized in**
**that** the first forming tool (15, 15', 15.1) has a draping position in the region of the connecting lines between the maximum positions (8, 8.1) and the yarn-transfer points (14, 14.1) and a detachment position outside the connecting lines, and in that the first forming tool (15, 15', 15.1) is rotatable and/or tiltable at least in the detachment position, and in the rotated and/or tilted state can also be moved into the respective draping position.

2. Device according to Claim 1,
**characterized in**
**that** a second forming tool (16, 16'), which in the draping position can be brought together with the first forming tool (15, 15', 15.1) and has a dedicated detachment position, is provided.

3. Device according to one of the preceding claims,
**characterized in**
**that** the direction of movement between the detachment position and the draping position of the first and/or a second forming tool (15, 15', 15.1, 16, 16') is disposed so as to be substantially perpendicular to the paths.

4. Device according to Claim 2,
**characterized in**
**that** the second forming tool (16, 16') is rotatable and/or tiltable at least in the detachment position, and in the rotated and/or tilted state can be moved into the draping position.

5. Device according to Claim 2,
**characterized in**
**that** the second forming tool (16, 16') is implemented as a hood which fits over the first forming tool (15, 15', 15.1) and that a gap for the yarns or rovings remains between the first and second forming tool.

6. Device according to one of the preceding claims,
**characterized in**
**that** the rotation axis of the first and/or a second forming tool (15, 15', 15.1, 16, 16') is substantially perpendicular to the paths and substantially parallel with the direction of movement between the detachment position and the draping position.

7. Device according to one of the preceding claims,
**characterized in**
**that** the first and/or a second forming tool (15, 15', 15.1, 16, 16') are/is equipped with a heating installation.

8. Device according to one of Claims 2 to 7,
**characterized in**
**that** the first and second forming tool (15, 15', 15.1, 16, 16') are equipped with a contact-pressure installation.

9. Device according to one of the preceding claims,
**characterized in**
**that** the first and/or a second forming tool (15, 15', 15.1, 16, 16') are/is fastened to a movement installation, in particular to a lifting table or a lowering installation, in a readily separable manner.

10. Method for manufacturing fibrous preforms (28, 28.1) which represent a preliminary stage in the manufacture of fibre-reinforced plastics components, for example, using a device according to one of the preceding claims, the method comprising the following successive method steps:
- tensioning yarns or rovings for a first layer by means of a plurality of grippers (5, 5.1);
- draping the first layer across a first forming tool (15, 15', 15.1);
- severing the yarns or rovings of the first layer;
- tensioning yarns or rovings for a second layer with the aid of a plurality of grippers (5, 5.1);
- draping a further layer across the first forming tool (15, 15', 15.1);
- severing the yarns or rovings of the second layer;
**characterized in**
**that** the draping is performed by driving the first forming tool (15, 15', 15.1) into the region of the tensioned yarns or rovings, and in that the first forming tool (15, 15', 15.1) is rotated and/or tilted after severing the yarns or rovings of the first layer and before draping the further layer.

11. Method according to Claim 10,
**characterized in**
**that** rotating is performed about an axis which is substantially perpendicular to the tensioned yarns or rovings (21) and is substantially parallel to the direction of movement when driving in.

12. Method according to Claim 10 or 11,
**characterized in**
**that** the first forming tool (15, 15', 15.1) is rotated about an angle between 10 and 170°, preferably between 30 and 150°, particularly preferably between 45 and 135°.

13. Method according to one of Claims 10 to 12,
**characterized in**
**that** fixing the first layer is performed, in particular by heating and/or pressing, between draping the first layer and tensioning for the further layer.

14. Method according to one of Claims 10 to 13,
**characterized in**
**that** during draping a second forming tool (16, 16'), in particular a hood, is driven close to the first forming tool (15, 15', 15.1) such that the respective layer is formed.

15. Method according to one of Claims 9 to 14,
**characterized in**
**that** draping the first and the further layers (25, 25.1, 26.1, 27.1) is performed in the same device.

## Revendications

1. Dispositif de fabrication de préformes à fibres (28, 28.1), qui représentent en particulier une phase préalable dans la fabrication de composants plastiques renforcés par des fibres, dans lequel le dispositif présente plusieurs stations de déroulement (1, 1.1, 2, 2.1, 3, 3', 4, 4') pour la fourniture de plusieurs fils ou mèches, plusieurs pinces (5, 5.1), qui peuvent saisir respectivement un/une ou plusieurs fils ou mèches (20, 20') à leur début, et au moins un premier outil de formage (15, 15', 15.1), dans lequel chaque pince (5, 5.1) est déplaçable en va et vient sur un chemin entre une position maximale (8, 8.1) et une position d'enlèvement (9, 9.1), et dans lequel la position d'enlèvement (9, 9.1) est prévue à un point de transfert de fil (14, 14.1) et est plus proche de la station de déroulement (1, 1.1, 2, 2.1, 3, 3', 4, 4'1) que la position maximale (8, 8.1), **caractérisé en ce que** le premier outil de formage (15, 15', 15.1) présente une position de drapage dans la région des lignes de liaison entre les positions maximales (8, 8.1) et les points de transfert de fil (14, 14.1) et une position de départ à l'extérieur des lignes de liaison et **en ce que** le premier outil de formage (15, 15', 15.1) peut tourner et/ou basculer au moins dans la position de départ et il peut être déplacé dans la position de drapage respective même dans la position tournée et/ou basculée.

2. Dispositif selon la revendication 1, **caractérisé en ce qu'**il est prévu un deuxième outil de formage (16, 16'), qui peut être amené dans la position de drapage avec le premier outil de formage (15, 15', 15.1) et qui présente une position de départ propre.

3. Dispositif selon l'une quelconque des revendications précédentes, **caractérisé en ce que** la direction du mouvement entre la position de départ et la position de drapage du premier et/ou d'un deuxième outil de formage (15, 15', 15.1, 16, 16') est disposée essentiellement perpendiculairement aux chemins.

4. Dispositif selon la revendication 2, **caractérisé en ce que** le deuxième outil de formage (16, 16') peut tourner et/ou basculer au moins dans la position de départ et il peut être déplacé dans la position de drapage même en position tournée et/ou basculée.

5. Dispositif selon la revendication 2, **caractérisé en ce que** le deuxième outil de formage (16, 16') est réalisé sous forme de hotte, qui s'ajuste au-dessus du premier outil de formage (15, 15', 15.1) et il reste une fente pour les fils et les mèches entre le premier et le deuxième outil de formage.

6. Dispositif selon l'une quelconque des revendications précédentes, **caractérisé en ce que** l'axe de rotation du premier et/ou d'un deuxième outil de formage (15, 15', 15.1, 16, 16') est essentiellement perpendiculaire aux chemins et essentiellement parallèle à la direction du mouvement entre la position de départ et la position de drapage.

7. Dispositif selon l'une quelconque des revendications précédentes, **caractérisé en ce que** le premier et/ou un deuxième outil de formage (15, 15', 15.1, 16, 16') est équipé d'un dispositif de chauffage.

8. Dispositif selon l'une quelconque des revendications 2 à 7, **caractérisé en ce que** le premier et le deuxième outils de formage (15, 15', 15.1, 16, 16') sont équipés d'un dispositif de pressage.

9. Dispositif selon l'une quelconque des revendications précédentes, **caractérisé en ce que** le premier et/ou un deuxième outil de formage (15, 15', 15.1, 16, 16') sont fixés de façon aisément séparable à un dispositif de déplacement, en particulier une table élévatrice ou un dispositif de descente.

10. Procédé de fabrication de préformes à fibres (28, 28.1), qui représentent par exemple une phase préalable dans la fabrication de composants plastiques renforcés par des fibres avec utilisation d'un dispositif selon l'une quelconque des revendications précédentes, qui présente les étapes suivantes l'une après l'autre:
- tendre des fils ou des mèches pour une première couche à l'aide de plusieurs pinces (5, 5.1),
- draper la première couche au moyen d'un premier outil de formage (15, 15', 15.1),
- séparer les fils ou les mèches de la première couche,
- tendre des fils ou des mèches pour une deuxième couche à l'aide de plusieurs pinces (5, 5.1),
- draper une autre couche au moyen du premier outil de formage (15, 15', 15.1),
- séparer les fils ou les mèches de la deuxième couche, **caractérisé en ce que** le drapage est effectué en introduisant le premier outil de formage (15, 15', 15.1) dans la région des fils tendus ou des mèches tendues et **en ce que** le premier outil de formage (15, 15', 15.1) est tourné et/ou basculé après la séparation des fils ou des mèches de la première couche et avant le drapage de l'autre couche.

11. Procédé selon la revendication 10, **caractérisé en ce que** la rotation est effectuée autour d'un axe, qui est essentiellement perpendiculaire aux fils tendus ou aux mèches tendues (21) et essentiellement parallèle à la direction du mouvement lors de l'introduction.

12. Procédé selon l'une des revendications 10 ou 11, **caractérisé en ce que** le premier outil de formage (15, 15', 15.1) est tourné d'un angle compris entre 10° et 170°, de préférence entre 30° et 150°, et de préférence encore entre 45° et 135°.

13. Procédé selon l'une quelconque des revendications 10 à 12, **caractérisé en ce que** l'on effectue une fixation de la première couche, en particulier par la chaleur et/ou la pression, entre le drapage de la première couche et la tension pour l'autre couche.

14. Procédé selon l'une quelconque des revendications 10 à 13, **caractérisé en ce que** lors du drapage, un deuxième outil de formage (16, 16'), en particulier une hotte, est joint au premier outil de formage (15, 15', 15.1), de telle manière que la couche respective soit formée.

15. Procédé selon l'une quelconque des revendications 10 à 14, **caractérisé en ce que** le drapage de la première couche et des autres couches (25, 25.1, 26.1, 27.1) est effectué dans le même dispositif.
